# EUROPÄISCHE PATENTSCHRIFT

(11) **EP 0 776 439 B1**
(45) Veröffentlichungstag und Bekanntmachung des Hinweises auf die Patenterteilung: **08.05.2002**
(21) Anmeldenummer: 95931164.8
(22) Anmeldetag: 19.08.1995
(51) Int. Cl.: F16L 55/162, F16L 58/10

(54) **VERFAHREN ZUR INNENBESCHICHTUNG VON HOHLKÖRPERN**
PROCESS FOR INTERNALLY COATING HOLLOW BODIES
PROCEDE DE REVETEMENT INTERIEUR DE CORPS CREUX

(30) Priorität: 20.08.1994 DE 4429601
(43) Veröffentlichungstag der Anmeldung: 04.06.1997
(73) Patentinhaber: TS Bau GmbH, 45473 Mühlheim a.d. Ruhr (DE)
(72) Erfinder: BÜSSING, Reinhard, D-58313 Herdecke (DE)
(74) Vertreter: Thiel, Christian, Dr. Dipl.-Chem.
(86) Internationale Anmeldenummer: EP9503301
(87) Internationale Veröffentlichungsnummer: WO9606299

(56) Entgegenhaltungen:
- EP-A- 0 299 134
- EP-A- 0 393 433
- WO-A-94/10408
- GB-A- 2 094 178
- GB-A- 2 218 773

## Beschreibung

Die Erfindung betrifft ein Verfahren zum Aufbringen einer Kunststoffschicht auf die Innenwandung von Hohlkörpern, das insbesondere zur Sanierung von Verund Entsorgungsleitungen und -schächten eingesetzt werden kann.

Mit der Industriealisierung in der zweiten Hälfte des vorigen Jahrhunderts und der damit verbundenen Bevölkerungszunahme wurde damit begonnen, zunächst die Bevölkerungszentren der Industrieländer mit einem System von Rohrleitungen zur Ver- und Entsorgung zu versehen. Für die Gas- und Wasserversorgung wurden dabei hauptsächlich gußeiserne Leitungen verwandt, überwiegend Grauguß, ein ausgesprochen dauerhaftes Material, das insbesondere auch bei der Wasserversorgung die Wasserqualität nicht beeinträchtigt und in Abwesenheit von Sauerstoff wenig korrodiert. Viele der in den 80iger Jahren des vorigen Jahrhunderts verlegten Leitungen sind entsprechend noch heute in Betrieb, weisen aber inzwischen doch erhebliche innere und äußere Korrosionsschäden auf, so daß es zunehmend zu Undichtigkeiten und dadurch bedingt zu Verlusten kommt. Bei Gasleitungen kommt hinzu, daß sie, soweit sie auf die Verteilung von Stadtgas ausgelegt sind, bei Betrieb mit Erdgas häufig undicht werden. Ältere Leitungen weisen mit Teer getränkte textile Dichtungen auf, die für ihre Dichtwirkung auf den relativ hohen Feuchtigkeitsgehalt des Stadtgases angewiesen sind. Bei dem relativ geringen Feuchtigkeitsgehalt des jetzt eingespeisten Erdgases schrumpfen diese Materialien und werden undicht.

Entsprechendes gilt für Abwasserleitungen soweit sie aus Gußeisen hergestellt sind, was bei kleineren Querschnitten häufig der Fall ist, und für die Kanalisation, die, soweit Leitungen größeren Querschnitts betroffen sind, in der Regel aus Beton, Steinzeug, Asbestzement oder ähnlichen Materialien besteht. Auch hier sind Leitungen älteren Datums inzwischen durch Korrosion und mechanische Belastung, wie sie durch Verkehrserschütterungen, Druckbelastung oder Erdbewegungen im Rahmen von Tiefbaumaßnahmen oder in Bergbaugebieten auftreten, vielfach schadhaft und sanierungsbedürftig. Hinzu kommt die mechanische Beanspruchung durch die Geschiebefracht vor allem der Straßenabwässer.

Es hat sich gezeigt, daß die über Jahrzehnte aufgebauten Leitungsnetze in ihren älteren Teilen dringend sanierungsbedürftig sind, wobei sich gerade die Schäden, die durch Erschütterungen und hohe Belastung bedingt sind, in den letzten Jahren vervielfältigt haben. Es besteht deshalb ein erheblicher Sanierungsbedarf, der noch dadurch verstärkt wurde, daß die Kommunen, in deren Besitz die Leitungsnetze zumeist sind, in der Vergangenheit zu wenig Geld in den Erhalt ihrer Leitungsnetze investiert haben. Der Sanierungsbedarf hat sich dadurch kumuliert.

Aber auch gegenwärtig ist eine vollständige Sanierung der Leitungsnetze durch Austausch defekter und alter Leitungen wegen der weiterhin bestehenden Finanznot der Kommunen nicht möglich.

Sanierungsverfahren sind gemäß dem Stand der Technik bekannt.

EP-A-0 393 433 beschreibt ein Verfahren zur Beschichtung von erdverlegten Abwasserkanälen aus Beton. Ziel dieses Verfahrens ist nicht die Sanierung eines defekten Rohres, sondern die Versiegelung der Oberfläche, um diese vor Korrosion zu schützen.

Desweiteren ist ein Verfahren zur Sanierung beschädigter Abwasserleitungen gemäß GB-A-2 218 773 bekannt, bei dem auf die Leitungswandungen zunächst eine Polyurethanschaumschicht aufgebracht wird, die im Anschluß daran mit einer chemisch stabilen Kunststoffversiegelung versehen wird. Der Schaumstoff selbst dient nicht der Reparatur von Schäden, sondern der thermischen Isolierung, die das Aushärten der darauf aufgebrachten Deckschicht erleichtern soll.

Ein anderes Verfahren ist aus EP-0 299 134 zur Innenausbesserung von installierten Leitungen bekannt. Hierbei werden Verkrustungen (Kalkablagerung), Rost, Abscheidungen aus dem Wasser und etc. mit Hilfe von erwärmtem Druckluft-Abrasivmittel-Gemisch von der Innenwandung entfernt, und anschließend werden diese mit vorgetrockneter Luft aus der Leitung herausgeblasen. Abschließend wird ein Haftharz ebenfalls mittels Druckluft auf die Innenwandung aufgespritzt und verteilt. Mit diesem Verfahren wird eine Verstopfung der Leitung verhindert, jedoch keine Sanierung von Rohrleitungen mit Schäden, wie z. B. Brüchen, Rissen und Undichtigkeiten im Dichtungsbereich, bewirkt.
Es besteht deshalb ein Bedarf an Sanierungsverfahren, mit denen defekte Leitungen des Ver und Entsorgungsnetzes kostengünstig saniert werden kann.

Der Erfindung liegt daher die Aufgabe zugrunde, ein Verfahren bereitzustellen, mit dem bestehende Leitungen kostengünstig für den weiteren Gebrauch hergerichtet und insbesondere abgedichtet werden können. Dabei muß das Verfahren geeignet sein, sowohl bestehende Schäden aufgrund von Rissen, Korrosionserscheinungen oder Brüchen abzudichten als auch zukünftigen Schäden vorzubeugen, so daß sich die Sanierung der Leitungen nicht in der vorübergehenden Reparatur von Schäden erschöpft, sondern eine dauerhafte Lösung für die weitere Nutzung der Leitungen bereitstellt. Insbesondere ist bei der Sanierung von Versorgungsleitungen sicherzustellen, daß durch diese Leitungen geführtes Trinkwasser durch die Sanierungsmaßnahme nicht beeinträchtigt wird. Die Sanierung muß bei Gasleitungen zu einer dauerhaften Gasdichtigkeit der sanierten Leitungen führen und bei Abwasserleitungen den verschiedenen im Abwasser vorhandenen korrosiven Stoffen dauerhaft widerstehen können. Die Beschichtungen von Abwasserleitungen sollen zudem beständig gegen die Geschiebefracht sein.
Diese Aufgabe wird mit einem Verfahren der eingangs genannten Art mittels Einbringen einer Beschichtungssonde in den zur Beschichtung vorgesehenen Hohlkörper, Aufbringen eines aushärtbaren mit mineralischer Füllstoffe gefüllten Kunststoffmaterials durch Aufspritzen oder Aufschleudern auf die zu beschichtende Innenwandung in der benötigten Schichtdicke und Aushärten oder aushärten lassen des Kunststoffmaterials gelöst, daß das Kunststoffmaterial zur Ausbildung einer geschlossene Zellstruktur ein Treibmittel und 2-95 Gew.% mineralische Füllstoffe enthält.
Es hat sich überraschend gezeigt, daß selbst über 100 Jahre alte Versorgungsleitungen mit einer elastischen Kunststoffschicht derartig ausgekleidet und abgedichtet werden können. Es ist ohne weiteres möglich, Versorgungsleitungen mit einer trinkwassergerechten Auskleidung bzw. Wandbeschichtung zu versehen und Gasleitungen dauerhaft abzudichten. Die Auskleidung mit einem Kunststoff bringt eine hinreichende Elastizität mit sich, um auch Erschütterungen und weiteren Brüchen des umgebenden Rohrmaterials standzuhalten. Die ausgehärteten Kunststoffmaterialien sind durchaus korrosionsbeständiger als bekannte Rohrleitungsmaterialien, was Abwasserleitungen anbetrifft.

Zudem wurde überraschend gefunden, daß sich derartige Kunststoffauskleidungen auch dazu eignen, Bohrlöcher sowie Wetterschächte des Bergbaus auszukleiden, was eine erhebliche Vereinfachung und Kostensenkung gegenüber herkömmlichen Maßnahmen zur Verfestigung und Abdichtung bedeutet. Zudem kann bei Anwendung des erfindungsgemäßen Verfahrens die grabenlose Rohrverlegung in größerem Umfang auf den Bau von Leitungsnetzen angewandt werden, da es möglich ist, durch Bodenverdrängung, Bohren oder Ausspülen erhaltenen "Leitungswege", mit einer den angestrebten Zwecken genügenden Wandung auszustatten. Auf diese Art und Weise können Verfahren der grabenlosen Rohrverlegung auch direkt für Hausanschlüsse nutzbar gemacht werden. Schließlich können auch bestehende Hohlkörper und Kavernen, wie Tanks, Zisternen, etc. mit einer dichtenden und stabilisierenden Kunststoffbeschichtung zu versehen.

Es versteht sich, daß das erfindungsgemäße Verfahren sowohl zur Sanierung von sanierungsbedürftigen Leitungen und Schächten verwandt werden kann als auch zur Beschichtung der Innenwandung von neu erstellten Leitungen und Schächten. Das Verfahren hat sich als ausgesprochen "schnell" erwiesen: Versorgungsleitungen können binnen 24 Stunden gebrauchsfertig saniert werden.

Im allgemeinen wird so vorgegangen, daß für die Beschichtung vorgesehene Leitungen zunächst verfahrensgemäß hergerichtet werden. Dies beinhaltet die Säuberung der zur Beschichtung vorgesehenen Wandung mit Hilfe mechanischer, chemischer oder physikalischer Methoden, wobei einer mechanischen Reinigung mit Hilfe abrasiv wirkender Mittel der Vorzug gegeben wird. Insbesondere bei Leitungen mit kleinem Durchmesser kann auch eine Reinigung mit chemischen Mitteln stattfinden. Von den Wandungen abgetragenes Material wie auch etwa in der Leitung befindliche Ablagerungen brauchen vor der Aufbringung des Kunststoffmaterials nicht restlos entfernt zu werden. Eine Glättung der Wandungen, beispielsweise bei mit Spüloder Bodendurchschlagssonden erstellten Leitungswegen, kann sinnvoll sein.

Im Anschluß an die Säuberung der Leitung ist es ggf. erforderlich, die zu beschichtende Wandung soweit zu entfeuchten, daß die Restfeuchte keine nachteiligen Auswirkungen auf die auszubringende Kunststoffschicht mehr haben kann. Die Entfeuchtung kann dadurch vorgenommen werden, daß die Leitung mit Luft oder Inertgas mit geringem Feuchtigkeitsgehalt oder mit trockener Heißluft gespült wird. In der Regel ist es aber völlig ausreichend, anstehende Feuchtigkeit zusammen mit den Rückständen der mechanischen Reinigung abzustreifen und auszutragen, beispielsweise mit Hilfe von Gummischeiben.

Im nächsten Schritt wird ein zur Aushärtung befähigtes Kunststoffmaterial in der erforderlichen Schichtdicke auf die Wandung aufgebracht. Das Kunststoffmaterial soll bei der Aushärtung eine so große Festigkeit erreichen, daß eine sich selbsttragende Kunststoffschicht auf der Innenwandung der Leitung oder des Schachtes entsteht. Die Restelastizität soll aber hoch genug sein, daß die Kunststoffschicht Erschütterungen der Leitung, Bewegungen und mechanischen Belastungen standhalten kann und auch bei Rissen in der umgebenden Rohrwandung nicht undicht wird.

Die Schichtdicke der Kunststoffschicht auf der Innenwandung der Leitung oder des Schachtes beträgt zweckmäßigerweise 0.1 bis 50 mm, vorzugsweise 1 bis 25 mm. Die Schichtdicke ist dabei von dem Leitungsquerschnitt abhängig wie auch vom Ausmaß der auszugleichenden Schäden bzw. Unebenheiten an der Rohrwandung. Einerseits dürfen kleine Leitungsquerschnitte durch die eingebrachte Kunststoffschicht nicht zu stark eingeengt werden, andererseits muß die Stärke der eingebrachten Kunststoffschicht ausreichen, Risse, Poren und Beschädigungen in der Rohrwandung auszugleichen. Zugleich muß über eine hinreichende Schichtdicke des ausgehärteten Kunststoffmaterials eine Mindeststandzeit der damit ausgekleideten Leitung garantiert werden.

Für das erfindungsgemäße Verfahren geeignete härtbare Kunststoffmaterialien sind solche, die eine ausreichende Beständigkeit gegenüber dem zu transportierenden Medium aufweisen. Dies bedeutet insbesondere, daß die Kunststoffmaterialien nach der Aushärtung vor allem wasser- und gasdicht sein müssen und durch Feuchtigkeit nicht angegriffen werden dürfen. Wird das erfindungsgemäße Verfahren auf zu sanierende Kanalisationen angewandt, kommt noch die Korrosionsbeständigkeit gegenüber in Abwässern üblichen korrosiv wirkenden Stoffen, wie beispielsweise Säuren, Laugen und Salzen, sowie gegenüber der Geschiebefracht hinzu. Eine Vielzahl von Kunststoffsystemen ist bekannt, die diese Anforderungen erfüllen.

Besonders geeignete Kunststoffmaterialien für das erfindungsgemäße Verfahren sind Polyurethan-Systeme, Acrylsysteme, Epoxidsysteme und Systeme auf Basis ungesättigter Polyester, die alle auf dem einen oder anderen Weg zur Aushärtung befähigt sind. Ein Vorteil aller dieser Systeme ist ihre geringe Feuchtigkeitsempfindlichkeit.

Geeignete Polyurethan-Systeme beruhen auf Polyurethanprepolymeren mit einem Rest reaktionsfähiger Isocyanatgruppen, die aus monomeren oder polymeren mehrfunktionellen Isocyanaten und mehrfunktionellen Reaktionspartnern, in der Regel Polyolen, Polyetherolen oder Polyesterolen hergestellt sind. Diese Prepolymere werden zur Aushärtung mit mehrfunktionellen Reaktionspartnern mit mindestens zwei freien, zur Umsetzung mit den Isocyanatgruppen verfügbaren OH-, SH- und/oder NH-Gruppen und ggf. den aus der Polyurethanchemie dem Fachmann bekannten, die Reaktion aktivierenden Zusatzmitteln umgesetzt. Beispielsweise seien hier genannt Wasser, Polyole, wie Ethylenglykol, Propylenglykol oder deren Oligomere, Polyesterole, Polyetherole, multifunktionelle Thiole oder Polyamine und deren Mischungen. Die Härtung beschleunigende Zusätze sind beispielsweise tertiäre Amine oder Metallsalze. Es handelt sich hierbei um Zweikomponentensysteme.

Grundsätzlich ist es auch möglich, Einkomponentensysteme einzusetzen, die mit in der Umgebung befindlicher Feuchtigkeit, beispielsweise der Luftfeuchtigkeit, aushärten. Unter den in Rohrleitungen herrschenden Bedingungen ist jedoch der Einsatz solcher Einkomponentenmaterialien, die zur Schaumbildung neigen, nur in besonderen Fällen zweckmäßig, wenn die zur Verfügung stehende Feuchtigkeitsmenge zuverlässig gesteuert werden kann. Einkomponentensysteme sind aber grundsätzlich unabhängig von der Zugabe einer zweiten, die Aushärtung bedingenden Komponente.

Des weiteren können Acryl-Systeme eingesetzt werden, d. h. Reaktionsprodukte, die durch radikalische Polymerisation ein- oder mehrfunktioneller monomerer oder oligomerer Derivate der Acryl- oder Methacrylsäure hergestellt werden. Insbesondere sind hier die Ester der Acyrl- und Methacrylsäure zu nennen. Die Polymerisation kann durch Einmischen von Reaktionsstartern in die Ausgangsmischung eingeleitet werden, beispielsweise von Radikalstartern auf Peroxidbasis oder dergleichen. Des weiteren kann die Aushärtung bzw. Vernetzung durch energiereiche Strahlung eingeleitet werden, beispielsweise UV-Licht oder Elektronenstrahlung. Es versteht sich, daß unter Acryl-Systemen auch Copolymerisate von (Meth)acrylsäure und deren Derivaten verstanden werden.

Erfahrensgemäß können ferner Epoxidharz-Systeme zum Einsatz kommen, d. h. Reaktionsprodukte aus höhermolekularen Verbindungen mit mindestens zwei reaktionsfähigen Epoxidgruppen und mehrfunktionellen Polyaminen, Polyaminoamiden oder Gemischen dieser Stoffe, denen aus der Epoxidchemie bekannte Reaktionsbeschleuniger zugesetzt werden können. Die Polyamine übernehmen dabei die Funktion der Härterkomponente.

Weiterhin kommen Systeme auf Basis ungesättigter Polyester in Frage, d. h. Reaktionsprodukte der radikalischen Polymerisation ungesättigter Polyester. Solche ungesättigten Polyester ergeben sich aus der Umsetzung mehrfunktioneller Alkohole mit ein- oder mehrfach ungesättigten mehrfunktionellen Carbonsäuren. Diese ungesättigten Polyester können in zu radikalischer Polymerisation befähigten Monomeren gelöst werden, beispielsweise Styrol oder Divinylbenzol, aber auch in Diallylphthalat und monomeren Acrylsäure- oder Methacrylsäurederivaten, etwa Estern, wie Methylacrylat oder Methylmethacrylat. Die Polymerisation wird durch Zumischen geeigneter Reaktionsstarter in die Harzmischung und/oder durch die Zufuhr von Energie (Wärme) oder energiereicher Strahlung (UV-Licht oder Elektronenstrahlung) gestartet.

Alle diese Systeme können neben mineralischen Füllstoffen übliche Zusatzstoffe enthalten, beispielsweise, Fasern, Farbstoffe, Stabilisatoren, Viskositätsregulierer und dergleichen. Sie sind durch Zusatz von Treibmitteln so modifiziert, daß sich während der Abbindereaktion eine ganz oder teilweise zellige Struktur ausbildet. Insbesondere der Zusatz von die Dauerhaftigkeit und Festigkeit der Kunststoffbeschichtung erhöhenden weiteren Materialien, beispielsweise verstärkender Fasern, kann ausgesprochen zweckmäßig sein.

Als Füllstoffe kommen insbesondere solche mineralischer Natur in Frage, beispielsweise Quarzsand, Elektrofilterasche, und dergleichen. Besonders bevorzugter Zuschlag aufgrund seines inerten Verhaltens, seines Preisniveaus und seines spezifischen Gewichts ist Quarzsand. Die mineralischen Zuschläge machen 2 bis 95 Gew.% des Kunststoffmaterials aus, insbesondere 50 bis 90 Gew.%. Als besonders geeignet hat sich eine Abmischung aus einem Teil Epoxidharz und fünf Teilen Quarzsand erwiesen, wobei dem Epoxidharz ein übliches Treibmittel zur Ausbildung eines feinporigen geschlossenzelligen Schaums mit einer Dichte im Bereich von 1,0 bis 2,0 g/cm³ zugemischt ist.

Zusätzlich zu mineralischen Füllstoffen oder alternativ dazu können Fasern in einer zur Erhöhung der Festigkeit erforderlichen Menge im Kunststoffmaterial vorhanden sein. Beispiele für geeignete Fasern sind Polypropylen-Stapelfasern, Stahlfasern oder mineralische Fasern, wie beispielsweise Glas- oder Steinwolle. Im allgemeinen sind Faseranteile von 0,5 bis 5 Gew.% im Kunststoffmaterial vollständig ausreichend.

Es versteht sich, daß die zum Einsatz kommenden Kunststoffmaterialien an und für sich bekannt sind.

Soweit das auf die Wandung der Leitung oder des Schachtes aufgebrauchte Kunststoffmaterial unmittelbar mit einem Härter versetzt wird, erfolgt die Härtung über den für das Material typischen Zeitraum ohne weitere äußere Einflußnahme. Erfolgt die Aushärtung des Kunststoffmaterials durch Strahlung oder Wärmezufuhr, ist es erforderlich, im Anschluß an die Aufbringung des Kunststoffmaterials die Schicht zu bestrahlen oder mit Wärme zu beaufschlagen.

Das erfindungsgemäße Verfahren ist vor allem zur Sanierung bestehender Leitungssysteme vorgesehen. Soweit diese Leitungssysteme nicht begehbar sind, ist es erforderlich, die einzelnen Verfahrensschritte mit Hilfe von dazu geeigneten Sonden vorzunehmen. Hierzu werden Leitungen in Abständen geöffnet, zumeist an Stellen, an denen ohnehin Schieber oder Schächte, Krümmer, Hydranten oder dergleichen vorgesehen sind. Die eröffneten Leitungen werden dann abschnittsweise saniert, wobei ggf. zunächst einmal eine Inspektionssonde eingeführt wird, mit der der Leitungszustand im einzelnen festgestellt werden kann. Solche Inspektionssonden bestehen beispielsweise aus einem Kamarasystem, das auf einen Wagen oder Schlitten montiert ist, der dimensionsmäßig auf den Leitungsquerschnitt abgestimmt ist und sich beispielsweise allseitig auf Rädern, Gleitkufen, Federn oder Bürsten gegen die Rohrwandung abstützt. Solche Sonden, die entweder durch die Leitung gezogen werden oder aber mit einem eigenen Antrieb versehen und ferngesteuert sind, sind bekannt.

Nach der Inspektion der Leitung und Feststellung des Sanierungsbedarfs, soweit erforderlich, wird mit Hilfe einer Reinigungssonde die Rohrwandung bearbeitet, um korrodiertes oder unebenes Material und Ablagerungen zu beseitigen und/oder die Wandung zu glätten. Bevorzugt ist eine mechanische Reinigung mit Bürsten, Kratzern oder rotierenden Federsystemen, die auf einem Schlitten montiert sein können oder aber durch die Leitung gezogen werden. Möglich ist auch die Reinigung durch Sandstrahlen. Die Reinigung umfaßt ggf. auch den Abtransport des Strahlmaterials wie auch des entfernten Guts, beispielsweise durch einen Spülvorgang, bevorzugt aber durch ein System von Gummischeiben, mit denen das Gut zusammen mit anstehender Freuchtigkeit abgestreift und ausgetragen wird.

Zur Verbesserung der Haftung des Kunststoffmaterials auf der Leitungswandung kann es zweckmäßig sein, eine Grundierung aufzubringen. Solche Grundierungen sind für das jeweils verwandte Kunststoffmaterial bekannt. Die Grundierungen sind geeignet, einer Hinterwanderung der Kunststoffschicht auf der Leitungswandung entgegenzutreten, insbesondere bei neu auftretenden Leitungsschäden und bei Neuanschlüssen an das Leitungsnetz.

Die Einbringung des zur Beschichtung vorgesehenen Kunststoffmaterials erfolgt ebenfalls mit Hilfe der oben beschriebenen Sonden, wobei auf einem dafür vorgesehenen Wagen oder Schlitten eine Appliziervorrichtung mit einem Spritz- oder Schleuderkopf vorgesehen ist. Diese Ausbringungsweise ist gegenüber einem Extrudiervorgang, wie er üblicherweise in der Kunststofftechnik verwandt wird, bevorzugt, weil sich hierdurch eine bessere Verbindung mit dem Untergrund und ein besseres Eindringen in Risse und Poren ergibt. In Verbindung mit einer vorgegebenen Ausbringungsrate kann die Schichtdicke der Beschichtung über die Sondengeschwindigkeit sehr genau gesteuert werden.

Im Anschluß an die Aufbringung des Kunststoffmaterials wird dies, sofern es den Härter bereits eingemischt enthält, über die erforderliche Zeit aushärten gelassen. Insbesondere die Polyurethan- und Epoxidharzsysteme, die den Härter und Härtungsbeschleuniger zugemischt enthalten, benötigen hierzu keine äußeren Einflüsse, allenfalls eine genaue Steuerung der Temperaturbedingungen. Bei Acryl- und Polyestersystemen, die aufgrund einer Radikalkettenreaktion aushärten, kann die Zufuhr von Wärme oder der Kettenstart mit Hilfe einer Strahlungsquelle erforderlich sein. Wird die Kettenreaktion mit Hilfe einer Strahlenquelle ausgelöst, kann diese unmittelbar im Anschluß an die Ausbringung des Kunststoffmaterials zur Einwirkung gebracht werden, beispielsweise durch feste Montage auf der gleichen Sonde, mit der das Kunststoffmaterial ausgebracht wird. Die Anwendung der Strahlung mit Hilfe einer separaten Sonde zu einem späteren Zeitpunkt ist aber ebenfalls möglich. Ist zum Start der Radikalkettenreaktion Wärme vorgesehen, was beispielsweise bei wärmeempfindlichen Radikalstartern im Kunststoffmaterial der Fall ist, kann diese Wärme in Form von Heißluft zugeführt werden oder aber auch in Form von Wärmestrahlung über beispielsweise eine auf einer Sonde montierte Infrarotquelle.

Erfindungsgemäß wird dem Kunststoffmaterial Treibmittel zugesetzt, so daß das Kunststoffmaterial eine zellige Struktur ausbildet. Aufgrund ihrer Elastizität und ihrer Isolierwirkung sind derartig ausgebildete Kunststoffmaterialien für bestimmte Anwendungszwecke von Vorteil. Besonders vorteilhaft sind aber Zellstrukturen mit geschlossenen Poren wegen ihres Vermögens, fehlerhafte Strukturen der zu sanierenden Leitungen auszufüllen und zu hinterwandern. Es wurde gefunden, daß mit Treibmitteln versetzte Kunststoffmaterialien, insbesondere auf Epoxidbasis, tief in fehlerhafte Strukturen der Leitungen, wie Löcher, Haarrisse, Auswaschungen und dergleichen, einzudringen vermögen und diese fehlerhaften Strukturen vollständig ausfüllen. Durch die Wandung der alten Leitung reichende Risse werden vollständig bis in das umgebende Erdreich hinein durchdrungen und verschlossen; eine pilzartige Ausdehnung auf der Außenseite der sanierten Leitung fördert zudem den Verbund zwischen alter Leitung und neuer Kunststoffbeschichtung.

Als Treibmittel werden aus der Kunststofftechnik bekannte Materialien verwandt. So kann bei Polyurethanen Wasser als Härterkomponente eingesetzt werden, das bei der Vernetzung zur Abspaltung von CO₂ führt, das wiederum die Schaumbildung fördert. Für die anderen Kunststoffsysteme werden übliche Treibmittel eingesetzt, die bei Wärmebehandlung oder unter den Polymerisationsbedingungen Treibgase abspalten, beispielsweise CO₂, N₂. Die für den Zerfall des Treibmittels benötigte Wärme kann dabei von außen zugeführt werden, wie zuvor beschrieben, oder aus der Reaktionswärme bei der Aushärtung des Kunststoffes stammen.

Im Anschluß an die Aufbringung des Kunststoffmaterials kann es erforderlich sein, die auf der Wandung gebildete Kunststoffhaut zu glätten, insbesondere dann, wenn die Aushärtung einige Zeit in Anspruch nimmt oder aber durch weitere Maßnahmen erst noch eingeleitet werden muß. Polyurethansysteme reagieren im allgemeinen jedoch so schnell, daß eine Glättung nicht erforderlich ist. Die Glättung der Kunststoffhaut kann beispielsweise dadurch erfolgen, daß der Spritzsonde ein Trichter hinterher läuft oder hinterher geführt wird, der das Kunststoffmaterial gegen die Wandung preßt und Tropfen bzw. Nasen einebnet oder abstreift. Alternativ kann im Anschluß an den Spritz- oder Schleudervorgang eines Schlauchfolie in die Leitung eingezogen werden, die mit Preßluft oder Wasser aufgeblasen wird und sich fest an die Kunststoffhaut anlegt und diese glättet. Auf diese Art und Weise kann auch eine Verdichtung des aufgetragenen Kunststoffmaterials erreicht werden. Die Schlauchfolie kann auch unmittelbar mit der Spritz- oder Schleudersonde in die Leitung eingezogen werden, so daß sie sich bereits am Ort befindet, wenn der Beschichtungsvorgang abgeschlossen ist. Falls es erforderlich ist, daß Kunststoffmaterial durch Wärme- oder Strahlungseinwirkung zu härten, kann dies durch die eingezogene Folie hindurch erfolgen. Es versteht sich, daß die Folie vor Ingebrauchnahme der Leitung wieder entfernt wird. Hierzu kann es zweckmäßig sein, die Folie mit einem Trennmittel zu beschichten, um ein Festkleben an dem aufgetragenen Kunststoffmaterial zu vermeiden. Es hat sich gezeigt, daß mit derartiger Glättungstechnik eine Haut erzeugt werden kann, der die Strömungseigenschaften herkömmlicher Leitungswege trotz der mit der Beschichtung verbundenen Querschnittsverengung deutlich verbessert.

Ein besonderes Einsatzgebiet des erfindungsgemäßen Verfahrens ist neben der Verwendung zur Sanierung von bestehenden Ent- und Versorgungsleitung die Auskleidung von Bohrlöchern sowie von Wetterschächten des Bergbaus. Hier können erhebliche Kosteneinsparungen erzielt werden, da auf ein Großteil der bisher notwendigen Maßnahmen zur Verfestigung und Abdichtung bzw. Sanierung der Wandungen verzichtet werden kann. Das erfindungsgemäße Verfahren ist herkömmlichen Beschichtungstechniken überlegen, da aufwendige Vorbereitung und Vorbehandlung der zubeschichtenden Wandungen verzichtet werden kann und das Kunststoffmaterial ausgesprochen schnell aushärtet, so daß es nicht zu langwierigen Betriebsunterbrechungen kommt. Das Verfahren eignet sich zur Beschichtung der Innenwandung von Bohrlöchern und Schächten mit einem Durchmesser von wenigen Zentimetern bishin zu etwa 5 m, wobei Längen bis zum 500 m problemlos bewältigt werden können. Ein üblicher Rohrausbau der Bohrlochoder Schachtwandung kann entfallen.

Entsprechend kann das erfindungsgemäße Verfahren zum Auskleiden von sanierungsbedürftigen oder dichtungsbedürftigen Hohlkörpern verwandt werden, beispielsweise Lagertanks oder Zisternen. Insbesondere ist hierbei an die Behandlung von sanierungsbedürftigen Öltanks gedacht, wie sie vielfach für die Heimbevorratung verwandt und im Erdreich vergraben sind. Mit Hilfe des erfindungsgemäßen Verfahrens ist es ohne weiteres möglich, eine stark korrodierte oder gar durchlässig gewordene Tankwand erneut zu stabilisieren und so abzudichten, daß eine langfristige Weiterbenutzung möglich ist.

Es versteht sich von selbst, daß das erfindungsgemäße Verfahren nicht nur zur Sanierung von bestehenden Leitungen und Schächten eingesetzt werden kann, sondern auch zur Ausrüstung von neuen Leitungen und Schächten, um von vornherein eine längere Lebensdauer und höhere Korrosionsbeständigkeit zu erzielen.

Schließlich kann das erfindungsgemäße Verfahren auch dazu eingesetzt werden, Ver- und Entsorgungsleitungen im Wege der grabenlosen Rohrverlegung zu erstellen. Bei der grabenlosen Rohrverlegung werden Leitungswege mit Hilfe einer Verdrängungs- oder Spülsonde oder durch Bohrungen erstellt. Zum Einsatz kommen hier üblicherweise druckluftbetriebene Bodendurchschlagsraketen oder Sonden, die über einen Spülkopf verfügen und den Leitungsweg unter Druck freispülen. Derartige Leitungswege können unmittelbar bei der Erstellung mit einer Kunststoffwandung versehen werden, wenn die Verdrängungsoder Spülsonde mit einem zusätzlichen Spritz- oder Schleuderkopf für das Kunststoffmaterial ausgestattet ist. In diesem Fall kann die ausgebrachte Menge an Kunststoffmaterial über einen Geschwindigkeitsfühler ohne weiteres an die Vortriebsgeschwindigkeit angepaßt werden, so daß eine einheitliche Schichtdicke erzielt werden kann. Dieses Verfahren ermöglicht es auf preiswerte Art, Ent- und Versorgungsleitungen zu verlegen, ohne daß umfangreiche Grabungsarbeiten durchzuführen wären. Die so erstellten Leitungen sind hinreichend stabil, um beispielsweise Abwässer aufzunehmen. Auch können darin Elektro- und Telefonkabel oder auch Gas-Schlauchleitungen verlegt werden.

## Patentansprüche

1. Verfahren zur Innenbeschichtung von Hohlkörpem mit Kunststoff, insbesondere zur Sanierung von Ver- und Entsorgungsleitungen und - schächten, mit
Einbringen einer Beschichtungssonde in den zur Beschichtung vorgesehenen Hohlkörper,
Aufbringen eines aushärtbaren mit mineralischen Füllstoffen gefüllten Kunststoffmaterials durch Aufspritzen oder Aufschleudem auf die zu beschichtende Innenwandung in der benötigten Schichtdicke, und
Aushärten oder Aushärtenlassen des Kunststoffmaterials, **dadurch gekennzeichnet, daß** das Kunststoffmaterial zur Ausbildung einer geschlossenenen Zellstruktur ein Treibmittel und 2 bis 95 Gew.-% mineralische Füllstoffe enthält.

2. Verfahren nach Anspruch 1, **dadurch gekennzeichnet, daß** das Kunststoffmaterial in einer Dicke von 0,1 bis 50 mm, vorzugsweise 1 bis 25 mm aufgetragen wird.

3. Verfahren nach einem der vorstehenden Ansprüche, **dadurch gekennzeichnet, daß** als Kunststoffmaterial ein Polyurethan-, Acryl-, Epoxidoder ungesättigtes Polyestersystem eingesetzt wird.

4. Verfahren nach einem der Ansprüche 1 bis 3, **dadurch gekennzeichnet, daß** das Kunststoffmaterial durch Strahlung gehärtet wird.

5. Verfahren nach einem der Ansprüche 1 bis 3, **dadurch gekennzeichnet, daß** das Kunststoffmaterial durch Zusatz eines chemischen Härters gehärtet wird.

6. Verfahren nach einem der Ansprüche 1 bis 5, **dadurch gekennzeichnet, daß** das Kunststoffmaterial Fasern und/oder andere Additive zugemischt enthält.

7. Verfahren nach einem der Ansprüche 1 bis 6, **dadurch gekennzeichnet, daß** das Kunststoffmaterial 50 bis 90 Gew.-% mineralische Füllstoffe enthält.

8. Verfahren nach einem der Ansprüche 1 bis 7, **dadurch gekennzeichnet, daß** als Füllstoff Quarzsand verwandt wird.

9. Verfahren nach einem der vorstehenden Ansprüche, **dadurch gekennzeichnet, daß** zur Haftungsverbesserung die Wandung mit einer Grundierung versehen wird.

10. Verfahren nach einem der vorstehenden Ansprüche, **dadurch gekennzeichnet, daß** die Wandung nach Aufbringen der Kunststoffschicht mechanisch geglättet wird.

11. Verfahren nach einem der vorstehenden Ansprüche, **dadurch gekennzeichnet, daß** die zur Beschichtung vorgesehene Wandung mechanisch von korrodierten oder unebenen Wandungsteilen befreit wird.

12. Verfahren nach einem der Ansprüche 1 bis 11 zur Sanierung von Gas- und Wasserleitungen sowie von Abwasserkanälen.

13. Verfahren nach einem der Ansprüche 1 bis 9 zur Auskleidung von Bohrlöchern und Wetterschächten des Bergbaus.

14. Verfahren nach einem der Ansprüche 1 bis 10, **dadurch gekennzeichnet, daß** mit Hilfe einer Bohrvorrichtung, Verdrängungs- oder Spülsonde ein Hohlkörper geschaffen wird, dessen Innenwandung unmittelbar mit dem aushärtbaren Kunststoffmaterial beschichtet wird.

## Claims

1. Method of coating the interior of hollow bodies with plastic material, particularly for the renovation of supply and disposal conduits and shafts, including introducing a coating probe into the hollow body provided for coating, applying a settable plastic material filled with mineral fillers by spraying or spinning onto the inner wall to be coated in the required thickness, and curing the plastic material or permitting it to cure, **characterised in that** in order to form a closed cell structure the plastics material contains a blowing agent and 2 to 95% by wt. mineral fillers.

2. Method as claimed in claim 1, **characterised in that** the plastics material is applied in a thickness of 0.1 to 50mm, preferably 1 to 25mm.

3. Method as claimed in one of the preceding claims, **characterised in that** a polyurethane, acrylic, epoxide or unsaturated polyester system is used as the plastic material.

4. Method as claimed in one of claims 1 to 3, **characterised in that** the plastic material is hardened by radiation.

5. Method as claimed in one of claims 1 to 3, **characterised in that** the plastic material is hardened by the addition of a chemical hardener.

6. Method as claimed in one of claims 1 to 5, **characterised in that** the plastic material contains fibres and/or other additives mixed in.

7. Method as claimed in one of claims 1 to 6, **characterised in that** the plastic material contains 50 to 90% by wt. mineral fillers.

8. Method as claimed in one of claims 1 to 7, **characterised in that** quartz sand is used as the filler.

9. Method as claimed in one of the preceding claims, **characterised in that** the wall is provided with a primer to improve adhesion.

10. Method as claimed in one of the preceding claims, **characterised in that** the wall is mechanically smoothed after application of the plastic layer.

11. Method as claimed in one of the preceding claims, **characterised in that** the wall provided for coating is mechanically freed of corroded or uneven wall portions.

12. Method as claimed in one of claims 1 to 11, for renovating gas and water conduits and sewers.

13. Method as claimed in one of claims 1 to 9, for lining bore holes and air shafts of mines.

14. Method as claimed in one of claims 1 to 10, **characterised in that** with the aid of a boring device, displacement probe or flushing probe, a hollow body is created whose inner wall is directly coated with the curable plastic material.

## Revendications

1. Procédé pour le revêtement intérieur de corps creux avec de la matière plastique, en particulier pour l'assainissement de conduites et de cuves d'alimentation et d'évacuation, avec
introduction d'une sonde de revêtement dans le corps creux destiné à être revêtu,
dépôt d'un matériau de matière plastique durcissable garnie de charges minérales par pulvérisation ou projection sur la paroi intérieure à revêtir dans l'épaisseur de couche voulue, et
durcissement ou maintien pour durcissement du matériau de matière plastique, **caractérisé en ce que** le matériau de matière plastique contient, pour la formation d'une structure à cellules fermées, un agent gonflant et 2 à 95 % en poids de charges minérales.

2. Procédé selon la revendication 1, **caractérisé en ce que** le matériau de matière plastique est déposé dans une épaisseur de 0,1 à 50 mm, de préférence de 1 à 25 mm.

3. Procédé selon l'une des revendications précédentes, **caractérisé en ce qu'**on utilise comme matériau de matière plastique un système de polyuréthanne, acrylique, époxyde ou polyester insaturé.

4. Procédé selon l'une des revendications 1 à 3, **caractérisé en ce que** le matériau de matière plastique est durci par rayonnement.

5. Procédé selon l'une des revendications 1 à 3, **caractérisé en ce que** le matériau de matière plastique est durci par addition d'un durcisseur chimique.

6. Procédé selon l'une des revendications 1 à 3, **caractérisé en ce que** le matériau de matière plastique contient des fibres et/ou d'autres additifs mélangés avec lui.

7. Procédé selon l'une des revendications 1 à 6, **caractérisé en ce que** le matériau de matière plastique contient 50 à 90 % en poids de charges minérales.

8. Procédé selon l'une des revendications 1 à 7, **caractérisé en ce qu'**on utilise comme charge du sable siliceux.

9. Procédé selon l'une des revendications précédentes, **caractérisé en ce que** pour améliorer la résistance la paroi est munie d'un apprêt

10. Procédé selon l'une des revendications précédentes, **caractérisé en ce que** la paroi est égalisée mécaniquement après dépôt de la couche de matière plastique.

11. Procédé selon l'une des revendications précédentes, **caractérisé en ce que** la paroi prévue pour le revêtement est débarrassée mécaniquement des parties de paroi corrodées ou inégales.

12. Procédé selon l'une des revendications 1 à 11 pour l'assainissement de conduites de gaz et d'eau, ainsi que de canaux d'eaux usées.

13. Procédé selon l'une des revendications 1 à 9 pour le revêtement des trous de sondage et des puits d'aérage de l'exploitation minière.

14. Procédé selon l'une des revendications 1 à 10, **caractérisé en ce qu'**on élabore avec l'aide d'un dispositif de forage, d'une sonde de déplacement ou d'une sonde de rinçage un corps creux dont la paroi intérieure est revêtue directement avec le matériau de matière plastique durcissable.
